Europäisches Patentamt

European Patent Office

Office européen des brevets

(11) Veröffentlichungsnummer: **0 130 396**
**A2**

(12) # EUROPÄISCHE PATENTANMELDUNG

(21) Anmeldenummer: **84106353.0**

(22) Anmeldetag: **04.06.84**

(51) Int. Cl.⁴: **H 04 B 9/00,** G 02 B 6/28, H 04 L 11/16

(30) Priorität: **28.06.83 DE 3323317**

(43) Veröffentlichungstag der Anmeldung: **09.01.85**
**Patentblatt 85/2**

(84) Benannte Vertragsstaaten: **AT BE CH DE FR GB IT LI LU NL SE**

(71) Anmelder: **Siemens Aktiengesellschaft, Berlin und München Wittelsbacherplatz 2, D-8000 München 2 (DE)**

(72) Erfinder: **Winzer, Gerhard, Dr.-Ing., Zugspitzstrasse 10, D-8011 Putzbrunn (DE)**

(54) Sternkoppler für lokale Netze der optischen Nachrichtentechnik.

(57) Es wird ein Sternkoppler für optische Datenbussysteme in Sternkonfiguration oder sonstige lokale Netze beschrieben. Der Sternkoppler weist einen passiven optischen Sternkoppler (1) in Form eines Durchgangsmischers auf, der die von Teilnehmersendern (in T1) gesendeten und dem passiven optischen Sternkoppler (1) in zuführenden Lichtwellenleitern (11,..., 1 N) des Systems zugeführten optischen Signale auf fortführende Lichtwellenleiter (11', ..., 1N') verteilt. Der Sternkoppler weist einen zusätzlichen optischen Sender (in 100) auf, dessen optische Signale ebenfalls in den passiven optischen Sternkoppler (1) einkoppelbar sind, sowie eine Horcheinrichtung (10) zum Abhorchen der dem passiven optischen Sternkoppler in den zuführenden Lichtwellenleitern (11, ..., 1N) zugeführten optischen Signale. Die Horcheinrichtung gibt Signale ab, die den abgehorchten Signalen entsprechen. Auch Ausführungsformen eines Sternkopplers mit einem passiven optischen Reflexions-Sternkoppler werden beschrieben.

0130396

SIEMENS AKTIENGESELLSCHAFT    Unser Zeichen
Berlin und München          VPA  83 P 1433 E

Sternkoppler für lokale Netze der optischen Nachrichtentechnik

Die vorliegende Erfindung betrifft einen Sternkoppler
für lokale Netze der optischen Nachrichtentechnik nach
dem Oberbegriff des Patentanspruchs 1.

Ein Beispiel für ein lokales Netz der optischen Nachrichtenübertragung sind optische Datenbusse in Sternkonfiguration. Solche Datenbusse in Sternkonfiguration
werden bisher entweder mit einem passiven optischen
Sternkoppler oder mit einem aktiven, elektrisch arbeitenden Sternkoppler zwischen den zu- und fortführenden
Lichtwellenleitern aufgebaut (vergl. hierzu M.R. Finley,
Optical fibers in local area networks - A review of
current progress, IFOC Vol. V, 1983, Handbook and Buyers
Guide, S. 47 bis 55). Beide Varianten haben im Vergleich
zueinander unterschiedliche Vor- und Nachteile. Ein
Vorteil der Variante mit passivem Sternkoppler besteht
z.B. darin, daß für N Teilnehmer insgesamt nur N Sender
benötigt werden, die in den Teilnehmerstationen angeordnet sind. Bei der Konfiguration mit aktivem Sternkoppler ist ausgangsseitig je Teilnehmer noch je ein
weiterer Sender vorzusehen. Dafür sinkt bei dieser
Konfiguration der Aufwand für die Kollisions- und Freileitungserkennung wesentlich, weil die zugehörigen Einrichtungen nur einmal in einer zentralen Verarbeitungseinrichtung notwendig sind.

Aufgabe der vorliegenden Erfindung ist es, einen Sternkoppler der eingangs genannten Art anzugeben, bei dem
Ed 1 Sti/20.6.1983

0130396

der Aufwand im Vergleich zu einem herkömmlichen passiven optischen Sternkoppler für die Kollisions- und Freileitungserkennung und im Vergleich zu einem herkömmlichen aktiven Sternkoppler der Aufwand an Sendern erheblich erniedrigt werden kann.

Diese Aufgabe wird durch einen Sternkoppler der eingangs genannten Art gelöst, der die im kennzeichnenden Teil des Patentanspruchs 1 angegebenen Merkmale aufweist.

Mit dem erfindungsgemäßen Sternkoppler ist ein hybrider Sternkoppler geschaffen worden, der bezüglich des Datentransports im physikalischen Medium das Verhalten eines passiven optischen Sternkopplers aufweist, und bei dem je Teilnehmer nur je ein Sender in den Teilnehmerstationen benötigt wird. Der zeitliche Datenfluß ist nach wie vor nicht durch Verarbeitungszeiten in einer Verarbeitungseinrichtung unterbrochen.

Der erfindungsgemäße Sternkoppler vereinigt die genannten Vorteile eines passiven und eines aktiven Sternkopplers auf sich und die Vorteile der Betriebsarten für beide Kopplertypen können vorteilhafterweise in einem einzigen Betriebsmodus zusammenwirken.

Bevorzugte und vorteilhafte Ausgestaltungen des erfindungsgemäßen Sternkopplers gehen aus den Unteransprüchen 2 bis 22 hervor.

Die Erfindung wird in der Beschreibung anhand der Figuren beispielhaft erläutert. Von den Figuren zeigen:

Figur 1 in perspektivischer Darstellung eine erste Ausführungsform des hybriden Sternkopplers mit passivem optischen Durchgangssternkoppler,

0130396

Figur 2 die Anordnung des hybriden Sternkopplers nach

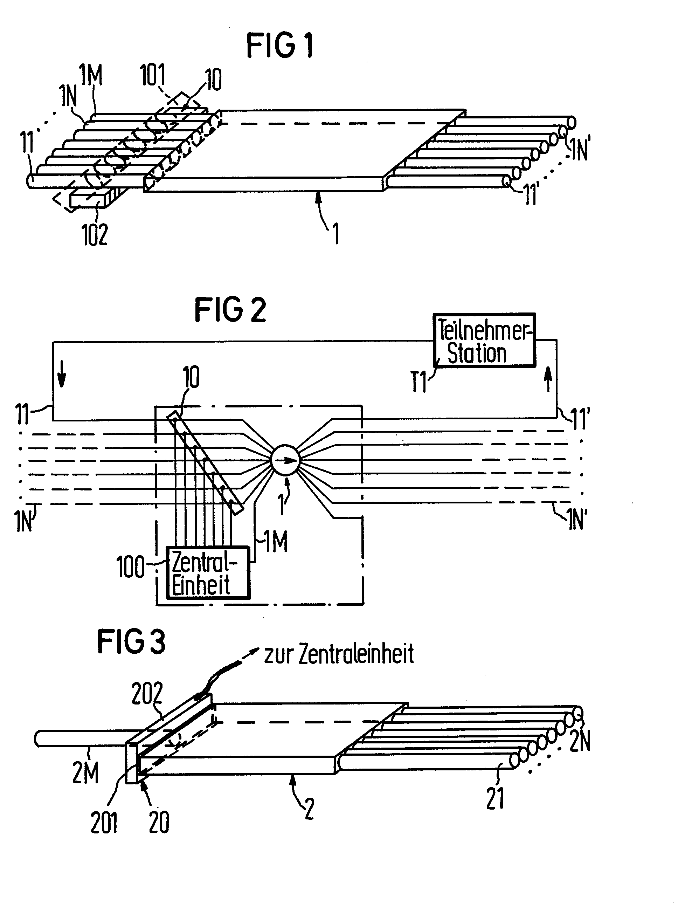

Figur 1 in einem optischen Datenbus in Sternkonfiguration,

Figur 3 in perspektivischer Darstellung eine Ausführungsform des hybriden Sternkopplers mit
passivem Reflexions-Sternkoppler,

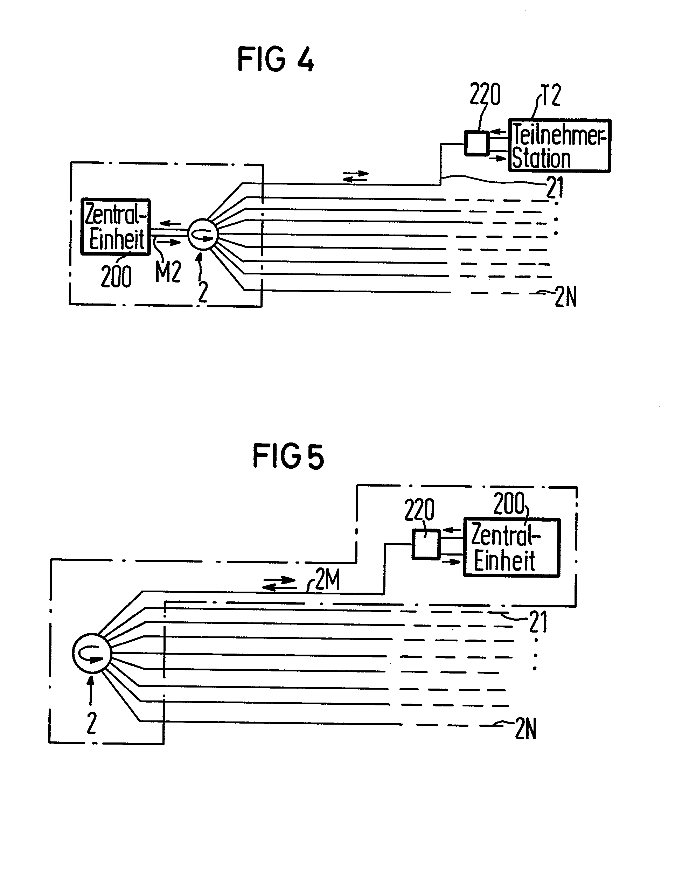

Figur 4 die Anordnung des hybriden Sternkopplers nach
Figur 3 in einem optischen Datenbus in Sternkonfiguration, und

Figur 5 die Anordnung einer modifizierten Ausführungsform des hybriden Sternkopplers nach Figur 3 in
einem optischen Datenbus in Sternkonfiguration.

Die Zeichnungen sind schematisch und nicht maßstabsgetreu.

Bei dem hybriden Sternkoppler nach Figur 1 besteht der
passive optische Durchgangssternkoppler 1 aus einem
Durchgangsmischer in Form eines Mischerplättchens. An
die linke Stirnfläche des Mischerplättchens 1 auf dessen
Eingangsseite sind die zuführenden Lichtwellenleiter 11
bis 1N in Form von Glasfasern angekoppelt, die dem
Mischerplättchen 1 optische Signale aus nicht dargestellten Teilnehmersendern zuführen. An der gegenüberliegenden rechten Stirnfläche dieses Mischerplättchens 1
auf dessen Ausgangsseite sind die fortführenden Glasfaser-
Lichtwellenleiter 11' bis 1N' angekoppelt.

Ein in einer zuführenden Faser 11 bis 1N dem Mischerplättchen 1 zugeführtes optisches Signal wird durch das
Plättchen auf alle fortführenden Fasern 11' bis 1N'
verteilt.

Zwei oder mehrere in den zuführenden Fasern 11 bis 1N parallel, d.h. in verschiedenen Fasern gleichzeitig zugeführte optische Signale werden durch das Mischerplättchen 1 vermischt.

Anstelle des Mischerplättchens können alle anderen Mischerstrukturen, beispielsweise bikonische Taper zur Realisierung des passiven optischen Sternkopplers verwendet werden.

Im Unterschied zum herkömmlichen passiven Durchgangssternkoppler weist der hybride Durchgangssternkoppler nach Figur 1 eine in den zuführenden Fasern 11 bis 1N angeordnete Horcheinrichtung 10 und einen neben den vorhandenen Teilnehmersendern zusätzlichen Sender auf, der beispielsweise in einer Zentraleinheit 100 (Fig. 2) angeordnet ist und dessen optische Signale über eine ebenfalls an die linke Stirnfläche des Mischerplättchens 1 angekoppelte zusätzliche zuführende Faser 1M dem Mischerplättchen 1 zuführbar sind.

Die Horcheinrichtung 10 besteht aus einer Auskoppeleinrichtung in Form eines schräg in den zuführenden Fasern angeordneten teildurchlässigen Spiegels 101 und aus einem Detektorfeld 102.

Der die zuführenden Fasern 11 bis 1N schneidende teildurchlässige Spiegel 101 ist beispielsweise so angeordnet, daß seine Spiegelebene senkrecht zu den Achsen der zuführenden Fasern 11 bis 1N verläuft und mit der Ebene, in der die zuführenden Fasern angeordnet sind, einen Winkel zwischen 0° und 90°, beispielsweise einen Winkel von 45°, einschließt.

Durch den teildurchlässigen Spiegel 101 wird ein Anteil eines jeden in einer zuführenden Faser 11 bis 1N
zugeführten optischen Signals seitlich aus der Faser
herausgespiegelt.

Das Detektorfeld 102 ist so bemessen, daß jeder zuführrenden Faser 11 bis 1N jeweils genau ein Detektor zugeordnet ist, der so angeordnet ist, daß er im wesentlichen nur den aus seiner Faser ausgekoppelten Signalanteil empfängt.

Der teildurchlässige Spiegel 101 kann beispielsweise so
realisiert werden, wie ein teildurchlässiger Spiegel bei
bekannten Lichtwellenleiter-Verzweigerelementen nach dem
Strahlteilerprinzip (siehe dazu: G. Winzer, H.F. Mahlein,
A. Reichelt: Appl. Opt. 20 (1981) S. 3128-3135).

Für die Auskoppeleinrichtung kommt jedoch auch jedes
andere Auskoppelprinzip in Frage. Auch kann der Ort der
partiellen Lichtauskopplung im Durchgangsmischer 1
selbst liegen. Für die Konfiguration nach Figur 1 ist
nur notwendig, daß die Auskopplung an einer Stelle
vorgenommen wird, bei der noch keine Vermischung der
zugeführten optischen Signale stattgefunden hat, so daß
das ausgekoppelte Licht eine Identifizierung des Teilnehmers zuläßt.

Die Detektoren des Detekorfeldes 102 werden zweckmäßigerweise parallel ausgelesen. Die Koinzidenz von zwei
oder mehr zugeführten Signalen in einer der zuführenden Lichtleitfasern 11 bis 1N kann ebenso wie das Fehlen jeglicher optischer Signale in den zuführenden Fasern 11 bis 1N erkannt werden.

In dem in Figur 2 darstellten Datenbussystem in Sternkonfiguration mit eingebautem hybriden Sternkoppler nach

Figur 1 kann beispielsweise die Koinzidenz von zwei oder mehr optischen Signalen in zwei oder mehreren der zuführenden Fasern 11 bis 1N in einer mit dem Detektorfeld 102 verbundenen, beispielsweise zentralen Verarbeitungseinrichtung 100 (Zentraleinheit) als Kollision und das Fehlen jeglicher optischer Signale in den zuführenden Fasern als Freileitungszustand erkannt werden. In der Zentraleinheit 100 ist auch der zusätzliche Sender angeordnet, der über die zusätzliche zuführende Faser 1M mit dem Durchgangsmischer 1 und dadurch über fortführenden Fasern 11' bis 1N' mit den Teilnehmerempfängern aller Teilnehmerstationen verbunden, von denen in der Figur 2 nur eine Station T2 dargestellt ist.

Über die zusätzliche zuführende Faser 1M können beispielsweise Jamm-Signale und bei Bedarf zentrale Steuerinformationen an alle Teilnehmer übermittelt werden.

Arbeitet das Datenbussystem oder lokale Netzwerk mit nicht zu hoher Bitrate, so läßt sich das parallel ausgelesene Detektorfeld 102 auch durch ein sequentiell ausgelesenes Detektorfeld mit Ladungsspeicherung ersetzen.

Bei dem hybriden Sternkoppler nach Figur 3 besteht der passive optische Reflexionssternkoppler 2 aus einem Reflexionsmischer, beispielsweise wieder in Form eines Mischerplättchens. An die rechte Stirnfläche des Mischerplättchens 2 auf dessen Eingangsseite sind die zuführenden Lichtwellenleiter 21 bis 2N in Form von Fasern angekoppelt, die dem Mischerplättchen 2 optische Signale aus nicht dargestellten Teilnehmersendern zuführen. An der gegenüberliegenden linken Stirnfläche des Mischerplättchens 2 ist ein Reflektor 201 aufgebracht, der die zugeführten optischen Signale in Richtung der Fasern 21 bis 2N zurückreflektiert, von denen sie fortgeleitet werden.

Die zuführenden Fasern 21 bis 2N bilden somit zugleich die fortführenden Lichtwellenleiter des Reflexionsmischers 2. Das Mischerplättchen 2 hat dieselbe Funktion wie das Mischerplättchen 1 des Durchgangsmischers, d.h. es verteilt wie dort die zugeführten optischen Signale auf die fortführenden Fasern und mischt wie dort die optischen Signale.

Im Unterschied zum herkömmlichen passiven optischen Reflexionssternkoppler weist der hybride Reflexionssternkoppler nach Figur 3 eine am Reflektor 201 vorgesehene Horcheinrichtung 20 und einen neben den vorhandenen Teilnehmersendern zusätzlichen Sender auf, der beispielsweise in einer Zentraleinheit 200 (Fig. 4) angeordnet ist und dessen optische Signale über eine an die linke Stirnfläche des Mischerplättchens 2 angekoppelte zusätzliche kurze zuführende Faser 1M dem Mischerplättchen 2 zuführbar sind.

Die Auskoppeleinrichtung der Horcheinrichtung 20 besteht aus dem Reflektor 201, der im vorliegenden Fall als teildurchlässiger Spiegel ausgebildet ist, so daß ein Anteil des ihm zugeführten Lichts durch ihn hindurch auf einen optoelektrischen Wandler, beispielsweise eine Fotodiode 202 gelangen kann, die auf dem Reflektor 201 aufgebracht ist. In der Fotodiode 202 ist eine durchgehende Öffnung ausgebildet, durch welche die zusätzliche Faser 2M hindurchragt und bis zum Reflektor 201 heranreicht. Die Lage der Einkoppelstelle für die optischen Signale aus dem zusätzlichen Sender kann auch neben der Fotodiode 202 sein. In beiden Fällen gelangen die optischen Signale aus dem zusätzlichen Sender, abgesehen vom Streulicht, nicht auf die Fotodiode.

In dem in der Figur 4 dargestellten Datenbussystem in Sternkonfiguration mit eingebautem hybriden Sternkoppler

0130396

nach Figur 3 wird das Signal aus der Fotodiode 202 in einer zentralen Verarbeitungseinrichtung 200 (Zentraleinheit) ausgewertet. Im Gegensatz zur Ausführungsform nach Figur 1 oder 2 fehlt allerdings hier die Möglichkeit, den sendenden Teilnehmer durch Faserzuordnung zu identifizieren.

In der Zentraleinheit 200 ist der zusätzliche Sender angeordnet, der optische Steuersignale, beispielsweise Jamm-Signale, über die zusätzliche Faser 2M und über das Mischerplättchen 2 in den Datenbus einkoppelt.

In dem in der Figur 5 dargestellten Datenbussystem in Sternkonfiguration mit der eingebauten modifizierten Ausführungsform des hybriden Reflexionssternkopplers ist der Reflektor des Reflexionsmischers nicht als teildurchlässiger Spiegel, sondern wie bisher als vollreflektierender Spiegel ausgebildet. Die vom zusätzlichen Sender in der Zentraleinheit 200 zum Reflexionsmischer 2 führende zusätzliche Faser 2M ist wie die zuführenden und fortführenden Fasern 21 bis 2N auf der Eingangsseite des Reflexionsmischers angekoppelt. Diese zuführende Faser 2M dient zugleich als fortführende Faser, in die ein Teil des vom Reflektor reflektierten Lichts ausgekoppelt wird. Dieses ausgekoppelte Licht wird von der Faser 2M wie bei den zu den Teilnehmerstationen T2 wegführenden Fasern 21, ..., 2N (siehe Fig. 4) über einen Duplexer 220 einem beispielsweise in der Zentraleinheit 200 angeordneten optoelektrischen Wandler zugeführt.

Demnach besteht bei der Ausführungsform nach Figur 5 die Auskoppeleinrichtung der Horcheinrichtung aus dem Reflektor der fortführenden Faser 2M und einem Duplexer.

Ähnlich wie ein hybrider Sternkoppler in die dargestellten Datenbusse eingebaut ist, kann er auch in sonstige lokale Netze eingebaut werden.

Obwohl die Betriebsweise und Teilnehmeridentifizierung nur anhand der Figuren 1 und 2 für die Anordnung mit Durchgangsmischer beschrieben wurde, ist diese Betriebsweise auch in Verbindung mit einem entsprechend modifizierten Reflexionsmischer möglich. Ebenso kann die Betriebsweise mit Kollisions- bzw. Freileitungserkennung ohne Teilnehmeridentifizierung, die nur für die Anordnung mit Reflexionsmischer dargestellt wurde, auch in einer Anordnung mit entsprechend modifiziertem Durchgangsmischer ausgeführt werden.

21 Patentansprüche
 5 Figuren

0130396

Patentansprüche

1. Sternkoppler für lokale Netzwerke der optischen Nachrichtentechnik, insbesondere für optische Datenbussysteme in Sternkonfiguration, mit einem passiven optischen Sternkoppler (1; 2) zum Verteilen eines oder mehrerer, von Teilnehmersendern (in T1; in T2) gesendeter und dem passiven optischen Sternkoppler (1; 2) in zuführenden Lichtwellenleitern (11, ..., 1N; 21, ..., 2N) des Netzes zuführbarer optischer Signale auf Lichtwellenleiter (11',...,1N'; 21, ..., 2N) des Netzes, die vom passiven Sternkoppler (1; 2) fortführen,   g e -
k e n n z e i c h n e t   d u r c h   einen zusätzlichen optischen Sender (in 100; in 200), dessen optische Signale ebenfalls in den passiven optischen Sternkoppler (1; 2) einkoppelbar sind, und durch eine Horcheinrichtung (10; 20) zum Abhorchen der dem passiven optischen Sternkoppler (1; 2) in den zuführenden Lichtwellenleitern (11, ..., 1N; 21, ..., 2N) zugeführten optischen Signale, die Signale abgibt, welche den abgehorchten Signalen entsprechen.

2. Koppler nach Anspruch 1,   d a d u r c h   g e k e n n -
z e i c h n e t ,   daß die Horcheinrichtung (10; 20) mit einer die von ihr abgegebenen Signale verarbeitenden Einrichtung (100; 200) verbunden ist, die den zusätzlichen optischen Sender (in 100; in 200) steuert.

3. Koppler nach Anspruch 1 oder 2,   d a d u r c h   g e -
k e n n z e i c h n e t ,   daß der zusätzliche Sender (in 100; in 200) durch einen zusätzlichen zuführenden Lichtwellenleiter (1M; 2M) mit dem passiven Sternkoppler (1; 2) verbunden ist.

0130396

4. Koppler nach einem der vorhergehenden Ansprüche, d a d u r c h   g e k e n n z e i c h n e t , daß die Horcheinrichtung (10; 20) aus einer Auskoppeleinrichtung (101; 201) besteht, welche die dem passiven optischen Sternkoppler (1; 2) zugeführten optischen Signale aus den zuführenden Lichtwellenleitern (11, ..., 1N, M; 21, ..., 2N, 2M) oder aus dem passiven optischen Sternkoppler (1; 2) selbst partiell auskoppelt.

5. Koppler nach Anspruch 4, d a d u r c h   g e - k e n n z e i c h n e t , daß die Auskoppeleinrichtung (101,; 201) aus einem im Lichtweg der dem passiven optischen Sternkoppler (1; 2) in den zuführenden Lichtwellenleitern (11, ..., 1N, 1M; 21, ..., 2N, 2M) zugeführten optischen Signale angeordneten teildurchlässigen Spiegel besteht.

6. Koppler nach einem der vorhergehenden Ansprüche, insbesondere nach einem der Ansprüche 4 bis 5, d a - d u r c h   g e k e n n z e i c h n e t , daß der Horcheinrichtung (10; 20) zumindest ein optoelektrischer Wandler (102; 202) zum Umwandeln der von ihr abgegebenen und den abgehorchten Signalen entsprechenden optischen Signale in entsprechende elektrische Signale zugeordnet ist.

7. Koppler nach einem der vorhergehenden Ansprüche, d a d u r c h   g e k e n n z e i c h n e t , daß der passive optische Sternkoppler aus einem Durchgangssternkoppler (1) besteht.

8. Koppler nach einem der vorhergehenden Ansprüche, d a d u r c h   g e k e n n z e i c h n e t , daß der passive optische Sternkoppler aus einem Reflexionsstern- koppler (2) besteht.

0130396

9. Koppler nach einem der vorhergehenden Ansprüche, insbesondere nach Anspruch 7, d a d u r c h · g e - k e n n z e i c h n e t , daß die Horcheinrichtung (10) an einer Stelle abhorcht, an der dem optischen passiven Sternkoppler (1) in den zuführenden Lichtwellenleitern (11, ..., 1N, 1M; 21, ..., 2N) parallel zugeführte optische Signale voneinander getrennt sind.

10. Koppler nach Anspruch 5 und 9, d a d u r c h g e k e n n z e i c h n e t , daß der die Auskoppel- einrichtung (101) der Horcheinrichtung (10) bildende teildurchlässige Spiegel in den zuführenden Lichtwellenleitern (11, ..., 1N, 1M) und schräg zu deren Achsen angeordnet ist, derart, daß er einen Anteil der zugeführten optischen Signale seitlich aus den zuführenden Lichtwellenleitern (11, ..., 1N, 1M) herausspiegelt.

11. Koppler nach Anspruch 6, 9 und 10, d a d u r c h g e k e n n z e i c h n e t , daß der optoelektrische Wandler (102) aus einem Detektorfeld besteht, das mehrere optoelektrische Detektoren aufweist, von denen jeder je einem zuführenden Lichtwellenleiter (11, ...,1N 1M) zugeordnet ist, und daß jeder Detektor so angeordnet ist, daß er im wesentlichen nur den aus dem zugeordneten Lichtwellenleiter ausgekoppelten Signalanteil empfängt.

12. Koppler nach Anspruch 11, d a d u r c h g e - k e n n z e i c h n e t , daß das Detektorfeld parallel auslesbar ist.

13. Koppler nach Anspruch 11, d a d u r c h g e - k e n n z e i c h n e t , daß das Detektorfeld ein sequentiell auslesbares Detektorfeld mit Ladungsspeicherung ist.

14. Koppler nach einem der vorhergehenden Ansprüche, d a d u r c h   g e k e n n z e i c h n e t , daß die optischen Signale des zusätzlichen Senders (in 100; in 200) in den passiven optischen Sternkoppler (1, 2) auf dessen Eingangsseite einkoppelbar sind, an der auch die zuführenden Lichtwellenleiter (11, ..., 1N; 21, ..., 2N) angekoppelt sind.

15. Koppler nach einem der vorhergehenden Ansprüche, insbesondere nach Anspruch 9, d a d u r c h   g e - k e n n z e i c h n e t , daß die Horcheinrichtung (20) an einer Stelle abhorcht, an der die in den zuführenden Lichtwellenleitern (21, ..., 2N) zugeführten optischen Signale vermischt sind.

16. Koppler nach Anspruch 5 und Anspruch 15, d a - d u r c h g e k e n n z e i c h n e t , daß der die Auskoppeleinrichtung (201) der Horcheinrichtung (20) bildende teildurchlässige Spiegel an einer Seitenfläche (201) des passiven optischen Sternkopplers (2) angebracht ist, auf welche die in den zuführenden Lichtwellenleitern (21, ..., 2N) zugeführten optischen Signale vermischt auftreffen.

17. Koppler nach Anspruch 8 und 16, d a d u r c h g e k e n n z e i c h n e t , daß der teildurchlässige Spiegel (201) zugleich den Reflektor des Reflexions- Sternkopplers bildet, der die zugeführten optischen Signale in Richtung der fortführenden Lichtwellenleiter (21, ..., 2N) reflektiert.

18. Koppler nach Anspruch 6, 8 und 16 oder 17, d a - d u r c h   g e k e n n z e i c h n e t , daß der opto- elektrische Wandler (202) auf dem teildurchlässigen Spiegel aufgebracht ist.

0130396

19. Koppler nach Anspruch 8 oder nach Anspruch 8 und einem der Ansprüche 15 bis 18, d a d u r c h g e - k e n n z e i c h n e t , daß die optischen Signale des zusätzlichen Senders (in 200) dem Reflexions-Sternkoppler (2) bei dessen Reflektor (201) zugeführt sind.

20. Koppler nach Anspruch 19, insbesondere nach Anspruch 3 und 19, d a d u r c h g e k e n n z e i c h n e t , daß die Einkoppelstelle zum Einkoppeln der optischen Signale des zusätzlichen Senders (in 200) in den Reflexions-Sternkoppler (2) neben dem oder in einem Fenster des Reflektors (201) oder/und des optoelektrischen Wandlers (202) liegt.

21. Koppler nach Anspruch 3, 6 und 8 oder 15, d a - d u r c h g e k e n n z e i c h n e t , daß der zusätzliche zuführende Lichtwellenleiter (2M) auf der gleichen einen Seite an den Reflexions-Sternkoppler (2) angekoppelt ist, wie die zuführenden und fortführenden Lichtwellenleiter (21, ..., 2N) und daß der zusätzliche zuführende Lichtwellenleiter (2M) über einen Duplexer (220) mit dem zusätzlichen Sender (in 200) und dem optoelektrischen Wandler verbunden ist, wobei der zusätzliche zuführende Lichtwellenleiter (2M) zugleich einen zusätzlichen fortführenden Lichtwellenleiter bildet.

FIG 1

FIG 2

Teilnehmer-Station

Zentral-Einheit

FIG 3

zur Zentraleinheit

FIG 4

220    T2

Teilnehmer-
Station

Zentral-
Einheit

200    M2

2

21

2N

FIG 5

220    200

Zentral-
Einheit

2M

21

2

2N